# EUROPEAN PATENT APPLICATION

(11) **EP 4 590 061 A1**
(43) Date of publication of application: **23.07.2025**
(21) Application number: 23909048.3
(22) Date of filing: 27.06.2023
(51) Int. Cl.: H04W 76/00, H04W 4/06, H04B 5/20, H04M 1/72412, H04W 4/80, H04W 76/14, H04W 84/18, H04W 84/20, H04W 8/00

(54) **DEVICE INTERACTION METHOD AND SYSTEM, AND ELECTRONIC DEVICE AND STORAGE MEDIUM**

(30) Priority: 29.12.2022 CN 202211717081
(71) Applicant: ZTE Corporation, Shenzhen, Guangdong 518057 (CN)
(72) Inventor: WANG, Chi, Shenzhen, Guangdong 518057 (CN)
(74) Representative: Canzler & Bergmeier Patentanwälte Partnerschaft mbB
(86) International application number: PCT/CN2023/102646
(87) International publication number: WO 2024/139103

(57) **Abstract**

Provided in the present application are a device interaction method, a device interaction system, an electronic device, and a computer-readable storage medium, wherein the device interaction method is applied to a first terminal. The method comprises: when a first operation is identified, broadcasting a first message according to the first operation, wherein the first message comprises first near-field connection information corresponding to the first operation; acquiring a second message, which is broadcast by a second terminal according to an identified second operation, wherein the second message comprises second near-field connection information corresponding to the second operation; and when it is determined that the first near-field connection information matches the second near-field connection information, controlling a first terminal to make a first connection with the second terminal.

## Description

### CROSS-REFERENCE TO RELATED APPLICATIONS

The present application claims the priority of Chinese Patent Application No. 202211717081.8, filed on December 29, 2022, the contents of which are incorporated herein in their entirety by reference.

### TECHNICAL FIELD

The present application relates to the field of communication technologies, and in particular, to a device interaction method, a device interaction system, an electronic device and a computer-readable storage medium.

### BACKGROUND

In recent years, for improving user experiences, mobile phone manufacturers are striving to create smart homes and smart offices, in which a multi-screen linkage is realized between multiple smart devices through a near-field communication, so that, for example, screen projection, edition across screens, input pass-back, application circulation or relay, file circulation across devices, clipboard across devices, sound circulation across devices, photography and videography across devices, file collaboration across devices, split-screen display, and the like are realized, and these are very valuable and attractive use scenes for users, and can bring brand new user experiences due to the linkage between the smart devices.

The realization of these user experiences depends on that the near-field communication between the devices enables a quick and convenient mutual discovery between the devices, but a current method for realizing the mutual discovery between the devices is not user-friendly and has a relatively high threshold for user's using.

### SUMMARY

In a first aspect, an embodiment of the present application provides a device interaction method, applied to a first terminal, including: in response to a first operation being identified, broadcasting a first message based on the first operation, the first message including first near-field connection information corresponding to the first operation; acquiring a second message broadcasted by a second terminal based on an identified second operation, the second message including second near-field connection information corresponding to the second operation; and in response to determining that the first near-field connection information matches the second near-field connection information, controlling a first connection between the first terminal and the second terminal.

In a second aspect, an embodiment of the present application provides an electronic device, including: at least one processor; and a memory having at least one computer program stored thereon, the at least one computer program, when executed by the at least one processor, causes the at least one processor to implement the device interaction method described above.

In a third aspect, an embodiment of the present application provides a computer-readable storage medium having a computer program stored thereon, the computer program, when executed by a processor, causes the processor to implement the device interaction method described above.

In a fourth aspect, an embodiment of the present application provides a device interaction system, including: a first terminal configured to, in response to a first operation being identified, broadcast a first message based on the first operation, the first message including first near-field connection information corresponding to the first operation, acquire a second message broadcasted by a second terminal based on an identified second operation, the second message including second near-field connection information corresponding to the second operation, and in response to determining that the first near-field connection information matches the second near-field connection information, control a first connection between the first terminal and the second terminal; and a second terminal configured to, in response to the second operation being identified, broadcast the second message based on the second operation, the second message including the second near-field connection information corresponding to the second operation, acquire the first message broadcasted by the first terminal based on the identified first operation, the first message including the first near-field connection information corresponding to the first operation, and in response to determining that the first near-field connection information matches the second near-field connection information, control a second connection between the second terminal and the first terminal.

### BRIEF DESCRIPTION OF DRAWINGS

Fig. 1 is a flowchart of a device interaction method applied to a first terminal in an embodiment of the present application;
Fig. 2 is a flowchart of a device interaction method applied to a second terminal in an embodiment of the present application;
Fig. 3 is a flowchart of a device interaction method provided in an example of the embodiment of the present application;
Fig. 4 is a flowchart of a device interaction method provided in an example of the embodiment of the present application;
Fig. 5 is a block diagram of an electronic device in an embodiment of the present application; and
Fig. 6 is a block diagram of a device interaction system in an embodiment of the present application.

### DETAIL DESCRIPTION OF EMBODIMENTS

In order to make those skilled in the art better understand the technical solutions of the present application, a device interaction method, a device interaction system, an electronic device and a computer-readable storage medium provided by the present application, are described in detail below with reference to the accompanying drawings.

Exemplary embodiments are described in detail below with reference to the accompanying drawings, but the exemplary embodiments may be embodied in different forms, and the present application should not be construed as limited to the embodiments set forth herein. The embodiments are provided to make the present application more thorough and complete, and for those skilled in the art more fully understanding the scope of the present application.

The embodiments of the present application and the technical features in the embodiments may be combined with each other if no conflict is incurred.

As used in the present application, a term "and/or" includes any and all combinations of at least one of listed items.

The terms used in the present application are for a purpose of describing particular embodiments only, and are not intended to limit the present application. As used in the present application, singular forms "a" and "the" include plural forms as well, i.e., to indicate at least one, unless the context clearly defines otherwise. It should further be understood that terms "includes/comprises" and/or "made of/consisted of' in the present application are used to specify a presence of at least one of recited features, integers, steps, operations, elements or components, but do not preclude a presence or an addition of at least one of other features, integers, steps, operations, elements, components or groups thereof.

Unless otherwise defined, meanings of all terms (including technical terms and scientific terms) used herein are the same as meanings commonly understood by one of ordinary skills in the art. It should further be understood that terms, such as those defined in common dictionaries, should be construed as having a meaning that is consistent with that in the background of the existing art and the present application, and should not be construed as having an idealized or over-formal meaning, unless expressly defined in the present application.

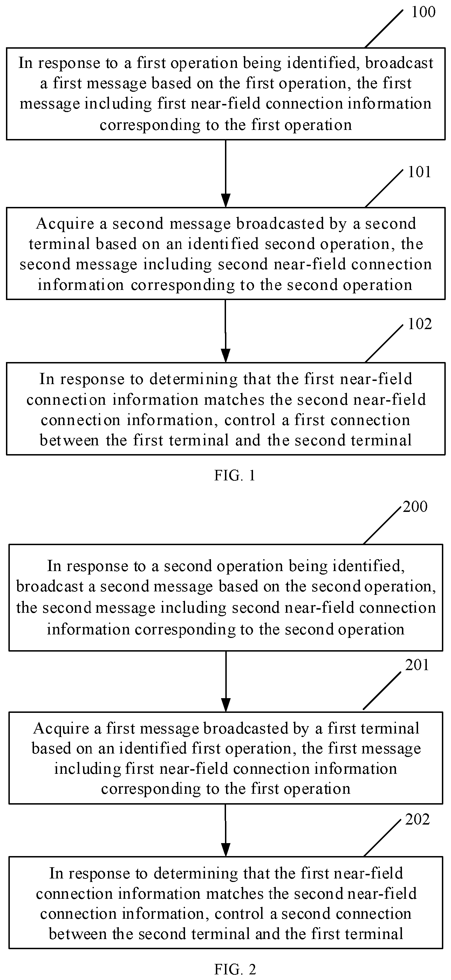

Fig. 1 is a flowchart of a device interaction method applied to a first terminal in an embodiment of the present application.

In a first aspect, referring to Fig. 1, an embodiment of the present application provides a device interaction method applied to a first terminal, the first terminal may be any one of a smart screen, a laptop, a desktop computer, a PAD, a mobile phone, a router, a smart speaker, a cloud terminal, a smart refrigerator, a storage device, smart glasses, a Virtual Reality (VR) device, a smart dressing mirror, a smart wearable device, a smart cabin, an aerial photography drone, a robot dog, a smart small appliance, and the like.

The device interaction method includes following operations 100 to 102.

At operation 100, in response to a first operation being identified, broadcasting a first message based on the first operation, the first message including first near-field connection information corresponding to the first operation.

The first operation is not limited in the present application, and the first operation may be, for example, any one of operations such as a first gesture, playing a video, playing an audio, and the like.

The first gesture is not limited in the present application, as long as the first gesture is sufficiently distinguished from other gestures. For example, the first gesture may be any one of a letter gesture, a numeric gesture, a single-symbol gesture, and the like.

In some implementations, the letter gesture may be at least one of letters from a to z or from A to Z.

In some implementations, the numeric gesture may be at least one of numbers from 0 to 9.

In some implementations, the single-symbol gesture may be, for example, at least one of a tick or cross symbol gesture, a triangle symbol gesture, a pentagram symbol gesture, a circle symbol gesture, a square symbol gesture, a diamond gesture, a gesture of continuously tapping for a preset number of times, a gesture of multi-finger sliding for a preset distance, or the like.

In some implementations, the first gesture may be identified by identifying a track of a user sliding on a touch screen, or an Artificial Intelligence (AI) algorithm may be employed to identify the first gesture from an image captured by a camera.

In some implementations, in response to the first operation being identified, and a preset first corresponding relation between operation information corresponding to the first operation, operation information corresponding to a second operation, and operation intention information includes operation information corresponding to the identified first operation, a subsequent operation, i.e., broadcasting the first message based on the first operation, is to be performed.

In some implementations, the operation information corresponding to the first operation may be a preset name or code, an instruction, a number, a serial number, a pattern, or the like corresponding to the first operation.

In some implementations, the operation information corresponding to the second operation may be a preset name or code, an instruction, a number, a serial number, a pattern, or the like corresponding to the second operation.

In some implementations, the code may be a dot-matrix track code corresponding to the operation, i.e., a sequence code of dots that a pattern drawn by the user in the dot-matrix successively passes.

In some implementations, the code may be a preset code for distinguishing different operations from each other, as long as operation codes corresponding to different operations are different and operation codes corresponding to operations the same as each other are the same.

In some implementations, the operation intention information may be an operation intention code. For example, 0100 represents projection across screens.

In some implementations, the operation intention information refers to information of an operation/function to be performed.

In some implementations, the user may be guided to set the first corresponding relation by a guider.

In some implementations, in response to the first operation being identified, and a screen being currently in an off state, the first message is broadcasted based on the first operation after the screen is unlocked.

In some implementations, the screen may be unlocked directly, or may be unlocked based on fingerprint, password or face recognition for improving security.

In some implementations, in response to the first operation being identified, and the screen being currently in an on state, the first message is broadcasted based on the first operation.

In some implementations, the first message further includes: first device information of the first terminal.

In some implementations, the first device information includes at least one of: first identification information of the first terminal, or first hardware information of the first terminal.

In some implementations, the first device information further includes at least one of: first manufacturer information of the first terminal, a Wireless Fidelity (Wifi) 5G frequency band supported by the first terminal, a Bluetooth Media Access Control (MAC) address of the first terminal, a Wifi address of the first terminal, information representing a Bluetooth Low Energy (BLE) version of the first terminal, information representing a multi-screen collaboration function supported by the first terminal, information representing a version of the multi-screen collaboration function supported by the first terminal, or the like.

In some implementations, the first identification information includes at least one of: the information representing the multi-screen collaboration function supported by the first terminal, or the information representing the version of the multi-screen collaboration function supported by the first terminal.

In some implementations, the first hardware information includes at least one of: information of a device type of the first terminal, information of a size and a resolution of a display screen of the first terminal, and information of a resolution of an image captured by a camera of the first terminal.

In some implementations, the first message further includes: first identification information of the first terminal.

In some implementations, the first message further includes: a message length of the first message.

In some implementations, the first near-field connection information includes at least one of: operation information corresponding to the first operation, operation intention information corresponding to the first operation, first time information of the first operation being identified, first user account information of the first terminal, first connection information of the first terminal, or a first connection validity period of the first connection information.

In some implementations, the first connection information is generated, after the first terminal and the second terminal are first connected successfully, or after the first terminal and the second terminal are first connected successfully following an invalidation of the first connection information previously generated.

In some implementations, the first connection information may include: a communication address of the first terminal, a communication address of the second terminal.

In some implementations, the first connection information may include: the communication address of the first terminal, the communication address of the second terminal and the first connection validity period.

In some implementations, the communication address may be a Bluetooth MAC address.

In some implementations, in response to being within the first connection validity period currently, the first near-field connection information includes the first connection information; in response to being not within the first connection validity period currently, the first near-field connection information excludes the first connection information.

In some implementations, the first near-field connection information includes the first connection information regardless of whether being within the first connection validity period currently; or, the first near-field connection information includes the first connection information and the first connection validity period.

In some implementations, it may be configured that, in response to the first terminal exiting a user account, the first connection information is automatically invalid.

In some implementations, the broadcasting a first message based on the first operation includes: acquiring the first near-field connection information corresponding to the first operation; and broadcasting the first message.

In some implementations, the first near-field connection information includes operation information corresponding to the first operation; the acquiring the first near-field connection information corresponding to the first operation includes: in a second corresponding relation between a track slid by the user and operation information, searching for the operation information corresponding to the identified track slid by the user.

In some implementations, the track slid by the user may be a track slid by the user on the touch screen, or may be a track slid by the user in front of the camera.

In some implementations, the first message carries the operation information corresponding to the first operation; or, the first message carries compressed and encoded operation information corresponding to the first operation.

In some implementations, in response to a length of the operation information corresponding to the first operation being less than or equal to a maximum length of a field for including the operation information in the first message, the first message carries the operation information corresponding to the first operation; in response to the length of the operation information corresponding to the first operation being greater than the maximum length of the field for including the operation information in the first message, the first message carries the compressed and encoded operation information corresponding to the first operation.

In some implementations, the first near-field connection information includes operation intention information corresponding to the first operation; the acquiring the first near-field connection information corresponding to the first operation includes: in the preset first corresponding relation between the operation information corresponding to the first operation, the operation information corresponding to the second operation and the operation intention information, searching for the operation intention information which corresponds to the operation information corresponding to the first operation.

In some implementations, the first message carries the operation intention information corresponding to the first operation; or, the first message carries compressed and encoded operation intention information corresponding to the first operation.

In some implementations, in response to a length of the operation intention information corresponding to the first operation being than or equal to a maximum length of a field for including the operation intention information in the first message, the first message carries the operation intention information corresponding to the first operation; in response to the length of the operation intention information corresponding to the first operation being greater than the maximum length of the field for including the operation intention information in the first message, the first message carries the compressed and encoded operation intention information corresponding to the first operation.

In some implementations, the first message may be broadcasted based on any one of: a BLE-based broadcast mechanism, a broadcast mechanism of ultrasonic communication, a broadcast mechanism of near-field optical communication, a broadcast mechanism of infrared communication, a Constrained Application Protocol (CoAP) of Wifi, and the like.

In some implementations, the first message may be broadcasted based on a broadcast mechanism of BLE4.x version. A maximum length of payload of a broadcast message of BLE4.x version is 31 bytes, and in response to the broadcast message being unable to carry all information to be carried, a message with a length of 31 bytes may be transmitted through a scan response in an active scan mode, that is, the first terminal firstly broadcasts the first message, and then, after receiving a first response message fed back from the second terminal, broadcasts a third message; at least one of the first near-field connection information, the first device information, or the first identification information is carried by the first message and the third message.

In some implementations, as shown in Table 1, the first identification information, the first user account information, the communication address of the first terminal and the like may be carried in the first message; as shown in Table 2, the operation information corresponding to the first operation, the operation intention information corresponding to the first operation, the first time information of the first operation being identified, and the like may be carried in the third message.

**Table 1**

| First message | | |
|---|---|---|
| Type | Basic information | First device information |
| Content | Message length, information representing whether to compress, | First manufacturer information, device type information, Wifi 5G frequency band supported by first terminal, |
| | compression algorithm, device name, and first identification information | Bluetooth MAC address of first terminal, Wifi address of first terminal |

**Table 2**

| Third message | | |
|---|---|---|
| Type | First device information | First near-field connection information |
| Content | Message length, information representing whether to compress, and information list representing multi-screen collaboration function supported by first terminal | Operation information corresponding to first operation, matching rule, operation intention information corresponding to first operation, first time information of first operation being identified, first user account information, and first connection information |

In some implementations, the first message may be broadcasted based on a broadcast mechanism of BLE5.x version. A maximum length of payload of a broadcast message of BLER 5.x version is 255 bytes, and the information to be carried may be carried in one broadcast message.

At operation 101, acquiring a second message broadcasted by a second terminal based on an identified second operation, the second message including second near-field connection information corresponding to the second operation.

The second operation is not limited in the present application, and the second operation may be, for example, any one of operations such as a second gesture, playing a video, playing an audio, and the like.

The second gesture is not limited in the present application, as long as the second gesture is sufficiently distinguished from with other gestures. For example, the second gesture may be any one of a letter gesture, a numeric gesture, a single-symbol gesture, and the like.

In some implementations, the letter gesture may be at least one of letters from a to z or from A to Z.

In some implementations, the numeric gesture may be at least one of numbers from 0 to 9.

In some implementations, the single-symbol gesture may be, for example, at least one of a tick or cross symbol gesture, a triangle symbol gesture, a pentagram symbol gesture, a circle symbol gesture, a square symbol gesture, a diamond gesture, a gesture of continuously tapping for a preset number of times, a gesture of multi-finger sliding for a preset distance, or the like.

In some implementations, the first operation and the second operation may be the same.

In some implementations, the first operation and the second operation may be different operations. For example, the first operation is a gesture of three-finger sliding from left to right for a preset distance, and the second operation is a gesture of three-finger sliding from right to left for a preset distance.

In some implementations, the first operation and the second operation may be different operations, and each may be a complete letter, a numeric gesture, or a portion of a single-symbol gesture, the single-symbol gesture may be, for example, any one of a tick or cross symbol gesture, a triangle symbol gesture, a pentagram symbol gesture, a circle symbol gesture, a square symbol gesture, and the like. For example, the first operation is a left-semicircle symbol gesture, the second operation is a right-semicircle symbol gesture, and the first operation and the second operation are combined to form one complete-circle symbol gesture.

In some implementations, the second message further includes second device information of the second terminal.

In some implementations, the second device information includes at least one of: second identification information of the second terminal, or second hardware information of the second terminal.

In some implementations, the second device information further includes at least one of: second manufacturer information of the second terminal, information representing whether Wifi 5G is supported by the second terminal, a Bluetooth MAC address of the second terminal, a Wifi MAC address of the second terminal, device type information, information representing a BLE version of the second terminal, information representing a multi-screen collaboration function supported by the second terminal, information representing a version of the multi-screen collaboration function supported by the second terminal, or the like.

In some implementations, the second identification information includes at least one of: the information representing the multi-screen collaboration function supported by the second terminal, or the information representing the version of the multi-screen collaboration function supported by the second terminal.

In some implementations, the second hardware information includes at least one of: information of a device type of the second terminal, information of a size and a resolution of a display screen of the second terminal, information of a resolution of an image captured by a camera of the second terminal, or the like.

In some implementations, the second message further includes: second identification information of the second terminal.

In some implementations, the second near-field connection information includes at least one of: operation information corresponding to the second operation, operation intention information corresponding to the second operation, second time information of the second operation being identified, second user account information of the second terminal, second connection information of the second terminal, or a second connection validity period of the second connection information.

In some implementations, the second message carries the operation information corresponding to the second operation; or the second message carries compressed and encoded operation information corresponding to the second operation.

In some implementations, in response to a length of the operation information corresponding to the second operation being less than or equal to a maximum length of a field for including the operation information in the second message, the second message carries the operation information corresponding to the second operation; in response to the length of the operation information corresponding to the second operation being greater than the maximum length of the field for including the operation information in the second message, the second message carries the compressed and encoded operation information corresponding to the second operation.

In some implementations, the second message carries the operation intention information corresponding to the second operation; or the second message carries compressed and encoded operation intention information corresponding to the second operation.

In some implementations, in response to a length of the operation intention information corresponding to the second operation being less than or equal to a maximum length of a field for including the operation intention information in the second message, the second message carries the operation intention information corresponding to the second operation; in response to the length of the operation intention information corresponding to the second operation being greater than the maximum length of the field for including the operation intention information in the second message, the second message carries the compressed and encoded operation intention information corresponding to the second operation.

In some implementations, the second connection information is generated, after the first terminal and the second terminal are first connected successfully, or after the first terminal and the second terminal are first connected successfully following an invalidation of the second connection information previously generated.

In some implementations, the second connection information may include: a communication address of the first terminal, a communication address of the second terminal.

In some implementations, the second connection information may include: the communication address of the first terminal, the communication address of the second terminal and the second connection validity period.

In some implementations, the communication address may be a Bluetooth MAC address.

In some implementations, in response to being within the second connection validity period currently, the second near-field connection information includes the second connection information; in response to being not within the second connection validity period currently, the second near-field connection information excludes the second connection information.

In some implementations, the second near-field connection information includes the second connection information regardless of whether being within the second connection validity period currently; or, the second near-field connection information includes the second connection information and the second connection validity period.

At operation 102, in response to determining that the first near-field connection information matches the second near-field connection information, controlling a first connection between the first terminal and the second terminal.

In some implementations, the first connection includes any one of: establishing a near-field wireless connection between the first terminal and the second terminal; disconnecting the near-field wireless connection between the first terminal and the second terminal; initiating a multi-screen collaboration operation from the first terminal to the second terminal; or executing a multi-screen collaboration operation initiated by the second terminal through the first terminal.

In some implementations, the multi-screen collaboration operation includes at least one of: projection operation across screens, input pass-back operation, copy and paste operations across screens, file collaboration operation across screens, multi-camera shooting operation with cameras across screens, application circulation and reply operation, sound playing circulation and reply operation, call circulation and reply operation, or the like.

In some implementations, in response to determining that the first identification information matches the second identification information, and the first near-field connection information matches the second near-field connection information, the first connection is controlled to be established between the first terminal and the second terminal.

In some implementations, determining that the first identification information matches the second identification information includes: determining that the first identification information and the second identification information are the same.

In some implementations, determining that the first near-field connection information matches the second near-field connection information includes determining that the first near-field connection information matches the second near-field connection information in response to at least one of followings: the operation information corresponding to the first operation matching the operation information corresponding to the second operation; the operation intention information corresponding to the first operation being the same as the operation intention information corresponding to the second operation; the first user account information matching the second user account information; or the first connection information being the same as the second connection information.

In some implementations, determining that the first near-field connection information matches the second near-field connection information includes: in response to the first connection information and the second connection information being the same and within the first connection validity period and the second connection validity period, determining that the first near-field connection information matches the second near-field connection information.

In some implementations, the operation information corresponding to the first operation matching the operation information corresponding to the second operation includes: the operation information corresponding to the first operation being the same as the operation information corresponding to the second operation; or the operation information corresponding to the first operation and the operation information corresponding to the second operation being in correspondence in the first corresponding relation.

In some implementations, the operation information corresponding to the first operation and the operation information corresponding to the second operation being in correspondence in the first corresponding relation refers to that the operation information corresponding to the second operation, which corresponds to the operation information corresponding to the first operation, is searchable in the first corresponding relation.

In some implementations, the operation information corresponding to the first operation and the operation information corresponding to the second operation being in correspondence in the first corresponding relation refers to that the operation information corresponding to the second operation, which corresponds to the operation information corresponding to the first operation, is searchable in the first corresponding relation, and in the first corresponding relation, operation intention information which corresponds to the operation information corresponding to the first operation, operation intention information which corresponds to the operation information corresponding to the second operation are the same as the operation intention information corresponding to the first operation and the operation intention information corresponding to the second operation.

In some implementations, the first user account information matching the second user account information includes: the first user account information and the second user account information being the same; or the first user account information and the second user account information being in correspondence in a preset third corresponding relation between the first user account information and the second user account information.

In some implementations, the first user account information and the second user account information being in correspondence in the third corresponding relation refers to that the second user account information corresponding to the first user account information is searchable in the third corresponding relation.

In some implementations, in response to determining that the first near-field connection information does not match the second near-field connection information, or the first identification information does not match the second identification information, query information is displayed for querying the user whether to continue a subsequent determination process, if a continuation instruction is received from the user, an authentication is performed through the second terminal, and in response to the authentication being passed, the subsequent determination process is continued; if no instruction or a stop instruction is received from the user, the present flow ends.

In some implementations, determining that the first identification information does not match the second identification information includes: determining that the first identification information and the second identification information are different.

In some implementations, determining that the first near-field connection information does not match the second near-field connection information includes determining that the first near-field connection information does not match the second near-field connection information in response to at least one of followings: the operation information corresponding to the first operation not matching the operation information corresponding to the second operation; the operation intention information corresponding to the first operation being different from the operation intention information corresponding to the second operation; the first user account information not matching the second user account information; or the first connection information being different from the second connection information.

In some implementations, determining that the first near-field connection information does not match the second near-field connection information includes: in response to the first connection information and the second connection information being different or not within the first connection validity period and the second connection validity period, determining that the first near-field connection information does not match the second near-field connection information.

In some implementations, the operation information corresponding to the first operation not matching the operation information corresponding to the second operation includes: the operation information corresponding to the first operation being different from the operation information corresponding to the second operation; or the operation information corresponding to the first operation and the operation information corresponding to the second operation being not in correspondence in the first corresponding relation.

In some implementations, the operation information corresponding to the first operation and the operation information corresponding to the second operation being not in correspondence in the first corresponding relation refers to that operation information corresponding to the second operation, which corresponds to the operation information corresponding to the first operation, is not searchable in the first corresponding relation.

In some implementations, the operation information corresponding to the first operation and the operation information corresponding to the second operation being not in correspondence in the first corresponding relation refers to that the operation information corresponding to the second operation, which corresponds to the operation information corresponding to the first operation, is searchable in the first corresponding relation, but in the first corresponding relation, operation intention information which corresponds to the operation information corresponding to the first operation, operation intention information which corresponds to the operation information corresponding to the second operation are different from the operation intention information corresponding to the first operation or the operation intention information corresponding to the second operation.

In some implementations, the first user account information not matching the second user account information includes: the first user account information and the second user account information being different; or the first user account information and the second user account information being not in correspondence in a preset third corresponding relation between the first user account information and the second user account information.

In some implementations, the first user account information and the second user account information being not in correspondence in the third corresponding relation refers to that the second user account information corresponding to the first user account information is not searchable in the third corresponding relation.

In some implementations, in response to the first terminal serving as a master device, performing the authentication through the second terminal includes: generating an authentication code, and displaying the generated authentication code; receiving an authentication code sent by the second terminal, and in response to the generated authentication code being the same as the received authentication code, the authentication is passed; in response to the generated authentication code being different from the received authentication code, the authentication is not passed.

In some implementations, in response to the first terminal serving as a slave device, performing the authentication through the second terminal includes: displaying an authentication code input interface, receiving an authentication code input by the user, and sending the authentication code input by the user to the second terminal for performing the authentication.

In some implementations, in response to the first terminal serving as the master device, performing the authentication through the second terminal includes: generating and displaying a connection two-dimensional code; receiving a connection authentication code obtained by scanning the connection two-dimensional code by the second terminal; performing a verification on the connection authentication code, and in response to the verification being passed, the authentication is passed; in response to that the verification being not passed, the authentication is not passed.

In some implementations, in response to the first terminal serving as the slave device, performing the authentication through the second terminal includes: scanning a connection two-dimensional code displayed by the second terminal to obtain a connection authentication code, and sending the connection authentication code to the second terminal.

In order to more clearly describe how to determine that the first terminal matches the second terminal, six examples are listed below for illustration, and the examples listed below are not intended to limit the protection scope of the present application.

### Example 1

The first message includes: the operation information corresponding to the first operation, and the operation intention information corresponding to the first operation; the second message includes: the operation information corresponding to the second operation, and the operation intention information corresponding to the second operation; and whether the first near-field connection information matches the second near-field connection information is determined based on the operation information corresponding to the first operation, the operation intention information corresponding to the first operation, the operation information corresponding to the second operation, and the operation intention information corresponding to the second operation.

In response to the operation information corresponding to the first operation being the same as the operation information corresponding to the second operation, and the operation intention information corresponding to the first operation being the same as the operation intention information corresponding to the second operation, it is determined that the first near-field connection information matches the second near-field connection information; in response to the operation information corresponding to the first operation being different from the operation information corresponding to the second operation, or the operation intention information corresponding to the first operation being different from the operation intention information corresponding to the second operation, it is determined that the first near-field connection information does not match the second near-field connection information; or in response to the operation information corresponding to the first operation and the operation information corresponding to the second operation being in correspondence in the first corresponding relation, and the operation intention information corresponding to the first operation being the same as the operation intention information corresponding to the second operation, it is determined that the first near-field connection information matches the second near-field connection information; in response to the operation information corresponding to the first operation and the operation information corresponding to the second operation being not in correspondence in the first corresponding relation, or the operation intention information corresponding to the first operation being different from the operation intention information corresponding to the second operation, it is determined that the first near-field connection information does not match the second near-field connection information.

### Example 2

The first message includes: the first identification information, the operation information corresponding to the first operation, and the operation intention information corresponding to the first operation; the second message includes: the second identification information, the operation information corresponding to the second operation, and the operation intention information corresponding to the second operation; and whether the first near-field connection information matches the second near-field connection information is determined based on the first identification information, the operation information corresponding to the first operation, the operation intention information corresponding to the first operation, the second identification information, the operation information corresponding to the second operation, and the operation intention information corresponding to the second operation.

In response to the first identification information being the same as the second identification information, the operation information corresponding to the first operation being the same as the operation information corresponding to the second operation, and the operation intention information corresponding to the first operation being the same as the operation intention information corresponding to the second operation, it is determined that the first near-field connection information matches the second near-field connection information; in response to the first identification information being different from the second identification information, or the operation information corresponding to the first operation being different from the operation information corresponding to the second operation, or the operation intention information corresponding to the first operation being different from the operation intention information corresponding to the second operation, it is determined that the first near-field connection information does not match the second near-field connection information; or, in response to the first identification information being the same as the second identification information, the operation information corresponding to the first operation and the operation information corresponding to the second operation being in correspondence in the first corresponding relation, and the operation intention information corresponding to the first operation being the same as the operation intention information corresponding to the second operation, it is determined that the first near-field connection information matches the second near-field connection information; in response to the first identification information being different from the second identification information, or the operation information corresponding to the first operation and the operation information corresponding to the second operation being not in correspondence in the first corresponding relation, or the operation intention information corresponding to the first operation being different from the operation intention information corresponding to the second operation, it is determined that the first near-field connection information does not match the second near-field connection information.

### Example 3

The first message includes: the first identification information, the first user account information, the operation information corresponding to the first operation, and the operation intention information corresponding to the first operation; the second message includes: the second identification information, the second user account information, the operation information corresponding to the second operation, and the operation intention information corresponding to the second operation; and whether the first identification information matches the second identification information is determined, whether the first near-field connection information matches the second near-field connection information is determined based on the first user account information, the operation information corresponding to the first operation, the operation intention information corresponding to the first operation, the second user account information, the operation information corresponding to the second operation, and the operation intention information corresponding to the second operation.

In response to the first user account information being the same as the second user account information, the operation information corresponding to the first operation being the same as the operation information corresponding to the second operation, and the operation intention information corresponding to the first operation being the same as the operation intention information corresponding to the second operation, it is determined that the first near-field connection information matches the second near-field connection information; in response to the first account information being different from the second account information, or the operation information corresponding to the first operation being different from the operation information corresponding to the second operation, or the operation intention information corresponding to the first operation being different from the operation intention information corresponding to the second operation, it is determined that the first near-field connection information does not match the second near-field connection information; or in response to the first user account information and the second user account information being in correspondence in a third corresponding relation, the operation information corresponding to the first operation being the same as the operation information corresponding to the second operation, and the operation intention information corresponding to the first operation being the same as the operation intention information corresponding to the second operation, it is determined that the first near-field connection information matches the second near-field connection information; in response to the first user account information and the second user account information being not in correspondence in the third corresponding relation, or the operation information corresponding to the first operation being different from the operation information corresponding to the second operation, or the operation intention information corresponding to the first operation being different from the operation intention information corresponding to the second operation, it is determined that the first near-field connection information does not match the second near-field connection information; or, in response to the first user account information being the same as the second user account information, the operation information corresponding to the first operation and the operation information corresponding to the second operation being in correspondence in the first corresponding relation, and the operation intention information corresponding to the first operation being the same as the operation intention information corresponding to the second operation, it is determined that the first near-field connection information matches the second near-field connection information; in response to the first account information being different from the second account information, or the operation information corresponding to the first operation and the operation information corresponding to the second operation being not in correspondence in the first corresponding relation, or the operation intention information corresponding to the first operation being different from the operation intention information corresponding to the second operation, it is determined that the first near-field connection information does not match the second near-field connection information; or in response to the first user account information and the second user account information being in correspondence in the third corresponding relation, the operation information corresponding to the first operation and the operation information corresponding to the second operation being in correspondence in the first corresponding relation, and the operation intention information corresponding to the first operation being the same as the operation intention information corresponding to the second operation, it is determined that the first near-field connection information matches the second near-field connection information; in response to the first account information and the second account information being not in correspondence in the third corresponding relation, or the operation information corresponding to the first operation and the operation information corresponding to the second operation being not in correspondence in the first corresponding relation, or the operation intention information corresponding to the first operation being different from the operation intention information corresponding to the second operation, it is determined that the first near-field connection information does not match the second near-field connection information.

### Example 4

The first message includes: the first connection information, the operation information corresponding to the first operation, and the operation intention information corresponding to the first operation; the second message includes: the second connection information, the operation information corresponding to the second operation, and the operation intention information corresponding to the second operation; and whether the first near-field connection information matches the second near-field connection information is determined based on the first connection information, the operation information corresponding to the first operation, the operation intention information corresponding to the first operation, the second connection information, the operation information corresponding to the second operation, and the operation intention information corresponding to the second operation.

In response to the first connection information being the same as the second connection information, the operation information corresponding to the first operation being the same as the operation information corresponding to the second operation, and the operation intention information corresponding to the first operation being the same as the operation intention information corresponding to the second operation, it is determined that the first near-field connection information matches the second near-field connection information; in response to the first connection information being different from the second connection information, or the operation information corresponding to the first operation being different from the operation information corresponding to the second operation, or the operation intention information corresponding to the first operation being different from the operation intention information corresponding to the second operation, it is determined that the first near-field connection information does not match the second near-field connection information; or, in response to the first connection information being the same as the second connection information, the operation information corresponding to the first operation and the operation information corresponding to the second operation being in correspondence in the first corresponding relation, and the operation intention information corresponding to the first operation being the same as the operation intention information corresponding to the second operation, it is determined that the first near-field connection information matches the second near-field connection information; in response to the first connection information being different from the second connection information, or the operation information corresponding to the first operation and the operation information corresponding to the second operation being not in correspondence in the first corresponding relation, or the operation intention information corresponding to the first operation being different from the operation intention information corresponding to the second operation, it is determined that the first near-field connection information does not match the second near-field connection information.

### Example 5

The first message includes: the first connection information, the first connection validity period, the operation information corresponding to the first operation, and the operation intention information corresponding to the first operation; the second message includes: the second connection information, the second connection validity period, the operation information corresponding to the second operation, and the operation intention information corresponding to the second operation; and whether the first near-field connection information matches the second near-field connection information is determined based on the first connection information, the first connection validity period, the operation information corresponding to the first operation, the operation intention information corresponding to the first operation, the second connection information, the second connection validity period, the operation information corresponding to the second operation, and the operation intention information corresponding to the second operation.

In response to the first connection information and the second connection information being the same and currently within the first connection validity period and the second connection validity period, the operation information corresponding to the first operation being the same as the operation information corresponding to the second operation, and the operation intention information corresponding to the first operation being the same as the operation intention information corresponding to the second operation, it is determined that the first near-field connection information matches the second near-field connection information; in response to the first connection information and the second connection information being different or currently not within the first connection validity period and the second connection validity period, or the operation information corresponding to the first operation being different from the operation information corresponding to the second operation, or the operation intention information corresponding to the first operation being different from the operation intention information corresponding to the second operation, it is determined that the first near-field connection information does not match the second near-field connection information; or, in response to the first connection information and the second connection information being the same and currently within the first connection validity period and the second connection validity period, the operation information corresponding to the first operation and the operation information corresponding to the second operation being in correspondence in the first corresponding relation, and the operation intention information corresponding to the first operation being the same as the operation intention information corresponding to the second operation, it is determined that the first near-field connection information matches the second near-field connection information; in response to the first connection information and the second connection information being different or currently not within the first connection validity period and the second connection validity period, or the operation information corresponding to the first operation and the operation information corresponding to the second operation being not in correspondence in the first corresponding relation, or the operation intention information corresponding to the first operation being different from the operation intention information corresponding to the second operation, it is determined that the first near-field connection information does not match the second near-field connection information.

### Example 6

The first message includes: the first identification information, the first user account information, the first connection information, the operation information corresponding to the first operation, and the operation intention information corresponding to the first operation; the second message includes: the second identification information, the second user account information, the second connection information, the operation information corresponding to the second operation, and the operation intention information corresponding to the second operation; and whether the first near-field connection information matches the second near-field connection information is determined based on the first connection information, the operation information corresponding to the first operation, the operation intention information corresponding to the first operation, the second connection information, the operation information corresponding to the second operation, and the operation intention information corresponding to the second operation.

In response to the first connection information being the same as the second connection information, the operation information corresponding to the first operation being the same as the operation information corresponding to the second operation, and the operation intention information corresponding to the first operation being the same as the operation intention information corresponding to the second operation, it is determined that the first near-field connection information matches the second near-field connection information; in response to the first connection information being different from the second connection information, or the operation information corresponding to the first operation being different from the operation information corresponding to the second operation, or the operation intention information corresponding to the first operation being different from the operation intention information corresponding to the second operation, it is determined that the first near-field connection information does not match the second near-field connection information; or, in response to the first connection information being the same as the second connection information, the operation information corresponding to the first operation and the operation information corresponding to the second operation being in correspondence in the first corresponding relation, and the operation intention information corresponding to the first operation being the same as the operation intention information corresponding to the second operation, it is determined that the first near-field connection information matches the second near-field connection information; in response to the first connection information being different from the second connection information, or the operation information corresponding to the first operation and the operation information corresponding to the second operation being not in correspondence in the first corresponding relation, or the operation intention information corresponding to the first operation being different from the operation intention information corresponding to the second operation, it is determined that the first near-field connection information does not match the second near-field connection information.

The conditions for determinations in the above examples may be combined with each other.

In some implementations, in response to not determining, that the first near-field connection information matches the second near-field connection information, within a preset time duration upon identifying the first operation, displaying prompt information for prompting the user that the connection fails.

In some implementations, the first terminal and the second terminal are peer-to-peer executing entities, and in response to determining that the first terminal matches the second terminal, directly controlling the first connection between the first terminal and the second terminal.

In some implementations, the first terminal and the second terminal are not peer-to-peer executing entities, before performing an operation corresponding to the first operation, the device interaction method further includes: determining a master-slave relation between the first terminal and the second terminal based on the first device information and the second device information; the controlling the first connection between the first terminal and the second terminal includes: controlling the first connection between the first terminal and the second terminal based on the master-slave relation between the first terminal and the second terminal.

In some implementations, the master-slave relation may be referred to as a relation between a server and a client, a relation between a source end and a sink end, and the like.

In some implementations, the determining a master-slave relation between the first terminal and the second terminal based on the first device information and the second device information includes: in response to hardware condition corresponding to the first hardware information being higher than hardware condition corresponding to the second hardware information, determining that the first terminal serves as a master device and the second terminal serves as a slave device. For example, in response to a size of the display screen of the first terminal being greater than a size of the display screen of the second terminal, it is determined that the first terminal serves as the master device and the second terminal serves as the slave device.

In some implementations, the determining a master-slave relation between the first terminal and the second terminal based on the first device information and the second device information includes: in response to hardware condition corresponding to the first hardware information being lower than hardware condition corresponding to the second hardware information, determining that the second terminal serves as a master device and the first terminal serves as a slave device. For example, in response to a size of the display screen of the first terminal being less than a size of the display screen of the second terminal, it is determined that the second terminal serves as the master device and the first terminal serves as the slave device.

In some implementations, the determining a master-slave relation between the first terminal and the second terminal based on the first device information and the second device information includes: in response to hardware condition corresponding to the first hardware information being the same as hardware condition corresponding to the second hardware information, determining the master-slave relation between the first terminal and the second terminal based on the first time information and the second time information.

In some implementations, the determining the master-slave relation between the first terminal and the second terminal based on the first time information and the second time information includes: in response to the first time information being earlier than the second time information, determining that the first terminal serves as the master device and the second terminal serves as the slave device.

In some implementations, the determining the master-slave relation between the first terminal and the second terminal based on the first time information and the second time information includes: in response to the first time information being later than the second time information, determining that the second terminal serves as the master device and the first terminal serves as the slave device.

In some implementations, hardware condition of a smart terminal with device type information being PAD is higher than that of a smart terminal with device type information being a mobile phone, and hardware condition of a smart terminal with device type information being a desktop computer, a notebook computer, a smart screen, or the like is higher than that of the smart terminal with the device type information being PAD.

In some implementations, for two smart terminals with the same device type information, the greater the size of the display screen is, the higher the hardware condition is.

In some implementations, the greater the size of the display screen of the smart terminal is, the higher the hardware condition of the smart terminal is.

In some implementations, for the projection operation across screens, the copy and paste operation across screens, and the file collaboration operation across screens, the master-slave relation is to be determined based on the device type information and information of the size of the display screen.

In some implementations, for the multi-camera shooting operation across screens, the master-slave relation is to be determined based on information of a resolution of an image captured by a camera.

In some implementations, the controlling the first connection between the first terminal and the second terminal based on the master-slave relation between the first terminal and the second terminal includes: initiating the first connection from the smart terminal serving as the slave device to the smart terminal serving as the master device.

In the device interaction method provided by the present application, the first connection is controlled to be performed between the first terminal and the second terminal based on the identified operation, i.e., an operation execution mode approximating to a natural authentication of the user is adopted, the threshold for user's using is relatively low, and the user experiences are improved.

Fig. 2 is a flowchart of a device interaction method applied to a second terminal according to an embodiment of the present application.

In a second aspect, referring to Fig. 2, an embodiment of the present application provides a device interaction method, applied to a second terminal, the second terminal may be any one of: a smart screen, a laptop, a desktop computer, a PAD, a mobile phone, a router, a smart speaker, a cloud terminal, a smart refrigerator, a storage device, smart glasses, a VR device, a smart dressing mirror, a smart wearable device, a smart cabin, an aerial photography drone, a robot dog, a smart small appliance, and the like.

The device interaction method includes following operations 200 to 202.

At operation 200, in response to a second operation being identified, broadcasting a second message based on the second operation, the second message including second near-field connection information corresponding to the second operation.

The second operation is not limited in the present application, and the second operation may be, for example, any one of operations such as a second gesture, playing a video, playing an audio, and the like.

The second gesture is not limited in the present application, as long as the second gesture is sufficiently distinguished from other gestures. For example, the second gesture may be any one of a letter gesture, a numeric gesture, a single-symbol gesture, and the like.

In some implementations, the letter gesture may be at least one of letters from a to z or from A to Z.

In some implementations, the numeric gesture may be at least one of numbers from 0 to 9.

In some implementations, the single-symbol gesture may be, for example, at least one of a tick or cross symbol gesture, a triangle symbol gesture, a pentagram symbol gesture, a circle symbol gesture, a square symbol gesture, a diamond gesture, a gesture of continuously tapping for a preset number of times, a gesture of multi-finger sliding for a preset distance, or the like.

In some implementations, the second gesture may be identified by identifying a track of the user sliding on the touch screen, or an AI algorithm may be employed to identify the second gesture from an image captured by a camera.

In some implementations, in response to the second operation being identified, and a preset first corresponding relation between operation information corresponding to the first operation, operation information corresponding to the second operation, and operation intention information includes operation information corresponding to the identified second operation, a subsequent operation, i.e., the broadcasting a second message based on the second operation, continues to be performed.

In some implementations, the operation information corresponding to the first operation may be a preset name or code, an instruction, a number, a serial number, a pattern, or the like corresponding to the first operation.

In some implementations, the operation information corresponding to the second operation may be a preset name or code, an instruction, a number, a serial number, a pattern, or the like corresponding to the second operation.

In some implementations, the code may be a dot-matrix track code corresponding to the operation, i.e., a sequence code of dots that a pattern drawn by the user in the dot-matrix successively passes.

In some implementations, the code may be a preset code for distinguishing different operations from each other, as long as operation codes corresponding to different operations are different and operation codes corresponding to operations the same as each other are the same.

In some implementations, the operation intention information may be an operation intention code. For example, 0100 represents projection across screens.

In some implementations, the operation intention information refers to information of an operation to be performed.

In some implementations, the user may be guided to set the first corresponding relation by a guider.

In some implementations, in response to the second operation being identified, and a screen being currently in an off state, the second message is broadcasted based on the second operation after the screen is unlocked.

In some implementations, the screen may be unlocked directly, or may be unlocked based on fingerprint, password or face recognition for improving security.

In some implementations, in response to the second operation being identified, and the screen being currently in an on state, the second message is broadcasted based on the second operation.

In some implementations, the second message further includes: second device information of the second terminal.

In some implementations, the second device information includes at least one of: second identification information of the second terminal, or second hardware information of the second terminal.

In some implementations, the second device information further includes at least one of: second manufacturer information of the second terminal, a Wifi 5G frequency band supported by the second terminal, a Bluetooth MAC address of the second terminal, a Wifi address of the second terminal, information representing a BLE version of the second terminal, information representing a multi-screen collaboration function supported by the second terminal, information representing a version of the multi-screen collaboration function supported by the second terminal, or the like.

In some implementations, the second identification information includes at least one of: the information representing the multi-screen collaboration function supported by the second terminal, or the information representing the version of the multi-screen collaboration function supported by the second terminal.

In some implementations, the second hardware information includes at least one of: device type information of the second terminal, information of a size and a resolution of a display screen of the second terminal, information of a resolution of an image captured by a camera of the second terminal, or the like.

In some implementations, the second message further includes: first identification information of the first terminal.

In some implementations, the second message further includes: a message length of the second message.

In some implementations, the second near-field connection information includes at least one of: operation information corresponding to the second operation, operation intention information corresponding to the second operation, second time information of the second operation being identified, second user account information of the second terminal, second connection information of the second terminal, or a second connection validity period of the second connection information.

In some implementations, the second connection information is generated after the first terminal and the second terminal are first connected successfully, or after the first terminal and the second terminal are first connected successfully following an invalidation of the first connection information previously generated.

In some implementations, the second connection information may include: a communication address of the first terminal, a communication address of the second terminal.

In some implementations, the second connection information may include: a communication address of the first terminal, a communication address of the second terminal, and a second connection validity period.

In some implementations, the communication address may be a Bluetooth MAC address.

In some implementations, in response to being within the second connection validity period currently, the second near-field connection information includes the second connection information; in response to being not within the second connection validity period currently, the second near-field connection information excludes the second connection information.

In some implementations, the second near-field connection information includes the second connection information regardless of being within the second connection validity period currently; or, the second near-field connection information includes the second connection information and the second connection validity period.

In some implementations, it may be configured that, in response to the second terminal exiting a user account, the second connection information is automatically invalid.

In some implementations, the broadcasting a second message based on the second operation includes: acquiring the second near-field connection information corresponding to the second operation; and broadcasting the second message.

In some implementations, the second near-field connection information includes operation information corresponding to the second operation; the acquiring the second near-field connection information corresponding to the second operation includes: in a second corresponding relation between a track slid by the user and operation information, searching for the operation information corresponding to the identified track slid by the user.

In some implementations, the track slid by the user may be a track slid by the user on the touch screen, or may be a track slid by the user in front of the camera.

In some implementations, the second message carries the operation information corresponding to the second operation; or, the second message carries compressed and encoded operation information corresponding to the second operation.

In some implementations, in response to a length of the operation information corresponding to the second operation being less than or equal to a maximum length of a field for including the operation information in the second message, the second message carries the operation information corresponding to the second operation; in response to the length of the operation information corresponding to the second operation being greater than the maximum length of the field for including the operation information in the second message, the second message carries the compressed and encoded operation information corresponding to the second operation.

In some implementations, the second near-field connection information includes operation intention information corresponding to the second operation; the acquiring the second near-field connection information corresponding to the second operation includes: in the preset first corresponding relation between the operation information corresponding to the first operation, the operation information corresponding to the second operation and the operation intention information, searching for operation intention information which corresponds to operation information corresponding to the second operation.

In some implementations, the second message carries the operation intention information corresponding to the second operation; or, the second message carries compressed and encoded operation intention information corresponding to the second operation.

In some implementations, in response to a length of the operation intention information corresponding to the second operation being less than or equal to a maximum length of a field for including the operation intention information in the second message, the second message carries the operation intention information corresponding to the second operation; in response to the length of the operation intention information corresponding to the second operation being greater than the maximum length of the field for including the operation intention information in the second message, the second message carries the compressed and encoded operation intention information corresponding to the second operation.

In some implementations, the second message may be broadcasted based on any one of: a BLE-based broadcast mechanism, a broadcast mechanism of ultrasonic communication, a broadcast mechanism of near-field optical communication, a broadcast mechanism of infrared communication, a WIFI CoAP, and the like.

In some implementations, the second message may be broadcasted based on a broadcast mechanism of BLE4.x version. A maximum length of payload of a broadcast message of BLE4.x version is 31 bytes, and in response to the broadcast message being unable to carry all information to be carried, a message with a length of 31 bytes may be transmitted by a scan response in an active scan mode, that is, the second terminal firstly broadcasts the second message, and then, after receiving a second response message fed back by the first terminal, broadcasts a fourth message; at least one of the second near-field connection information, the second device information, and the second identification information is carried by the second message and the fourth message.

In some implementations, as shown in Table 3, the second identification information, the second user account information, the communication address of the second terminal and the like may be carried in the second message; as shown in Table 4, the operation information corresponding to the second operation, the operation intention information corresponding to the second operation, the second time information of the second operation being identified, and the like may be carried in the fourth message.

**Table 3**

| Second message | | |
|---|---|---|
| Type | Basic information | Second device information |
| Content | Message length, information representing whether to compress, compression algorithm, device name, and second identification information | Second manufacturer information, device type information of second terminal, Wifi 5G frequency band supported by second terminal, Bluetooth MAC address of second terminal, Wifi address of second terminal |

**Table 4**

| Fourth message | | |
|---|---|---|
| Type | Second device information | Second near-field connection information |
| Content | Message length, information representing whether to compress, and information list representing multi-screen collaboration function supported by first terminal | Operation information corresponding to second operation, matching rule, operation intention information corresponding to second operation, second time information of second operation being identified, second user account information, and second connection information |

In some implementations, the second message may be broadcasted based on a broadcast mechanism of BLE5.x version. A maximum length of payload of a broadcast message of BLER 5.x version is 255 bytes, and the information to be carried may be carried in one broadcast message.

At operation 201, acquiring a first message broadcasted by a first terminal based on an identified first operation, the first message including first near-field connection information corresponding to the first operation.

The first operation is not limited in the present application, and the first operation may be, for example, any one of operations such as a first gesture, playing a video, playing an audio, and the like.

The first gesture is not limited in the present application, as long as the first gesture is sufficiently distinguished from other gestures. For example, the first gesture may be any one of a letter gesture, a numeric gesture, a single-symbol gesture, and the like.

In some implementations, the letter gesture may be at least one of letters from a to z or from A to Z.

In some implementations, the numeric gesture may be at least one of numbers from 0 to 9.

In some implementations, the single-symbol gesture may be, for example, at least one of a tick or cross symbol gesture, a triangle symbol gesture, a pentagram symbol gesture, a circle symbol gesture, a square symbol gesture, a diamond gesture, a gesture of continuously tapping for a preset number of times, a gesture of multi-finger sliding for a preset distance, or the like.

In some implementations, the second device information includes at least one of: second identification information of the second terminal, or second hardware information of the second terminal.

In some implementations, the second device information further includes at least one of: second manufacturer information of the second terminal, information representing whether Wifi 5G is supported by the second terminal, a Bluetooth MAC address of the second terminal, a Wifi MAC address of the second terminal, device type information, information representing a BLE version of the second terminal, information representing a multi-screen collaboration function supported by the second terminal, information representing a version of the multi-screen collaboration function supported by the second terminal, or the like.

In some implementations, the second identification information includes at least one of: the information representing the multi-screen collaboration function supported by the second terminal, or the information representing the version of the multi-screen collaboration function supported by the second terminal.

In some implementations, the second hardware information includes at least one of: information of a size and a resolution of a display screen of the second terminal, information of a resolution of an image captured by a camera of the second terminal, or the like.

The first operation is not limited in the present application, as long as the first operation is sufficiently distinguished from other operations. For example, the first operation may be any one of a letter operation, a numeric operation, a single-symbol operation, and the like.

In some implementations, the letter operation may be at least one of letters from a to z or from A to Z.

In some implementations, the numeric operation may be at least one of numbers from 0 to 9.

In some implementations, the single-symbol operation may be, for example, at least one of a tick or cross symbol operation, a triangle symbol operation, a pentagram symbol operation, a circle symbol operation, a square symbol operation, a diamond operation, an operation of continuously tapping for a preset number of times, an operation of multi-finger sliding for a preset distance, or the like.

In some implementations, the first operation and the second operation may be the same.

In some implementations, the first operation and the second operation may be different operations. For example, the first operation is a gesture of three-finger sliding from left to right for a preset distance, and the second operation is a gesture of three-fingers sliding from right to left for a preset distance.

In some implementations, the first operation and the second operation may be different operations, and each may be a complete letter, a numeric gesture, or a portion of a single-symbol gesture, the single-symbol gesture may be, for example, any one of a tick or cross symbol gesture, a triangle symbol gesture, a pentagram symbol gesture, a circle symbol gesture, a square symbol gesture, and the like. For example, the first operation is a left-semicircle symbol gesture, the second operation is a right-semicircle symbol gesture, and the first operation and the second operation are combined to form one complete-circle symbol gesture.

In some implementations, the first message further includes first device information of the first terminal.

In some implementations, the first device information includes at least one of: first identification information of the first terminal, or first hardware information of the first terminal.

In some implementations, the first device information further includes at least one of: first manufacturer information of the first terminal, information representing whether Wifi 5G is supported by the first terminal, a Bluetooth MAC address of the first terminal, a Wifi MAC address of the first terminal, device type information, information representing a BLE version of the first terminal, information representing a multi-screen collaboration function supported by the first terminal, information representing a version of the multi-screen collaboration function supported by the first terminal, or the like.

In some implementations, the first identification information includes at least one of: the information representing the multi-screen collaboration function supported by the first terminal, or the information representing the version of the multi-screen collaboration function supported by the first terminal.

In some implementations, the first hardware information includes at least one of: information of a size and a resolution of a display screen of the first terminal, information of a resolution of an image captured by a camera of the first terminal, or the like.

In some implementations, the first message further includes: first identification information of the first terminal.

In some implementations, the first near-field connection information includes at least one of: operation information corresponding to the first operation, operation intention information corresponding to the first operation, first time information of the first operation being identified, first user account information of the first terminal, first connection information of the first terminal, or a first connection validity period.

In some implementations, the first message carries the operation information corresponding to the first operation; or the first message carries compressed and encoded operation information corresponding to the first operation.

In some implementations, in response to a length of the operation information corresponding to the first operation being less than or equal to a maximum length of a field for including the operation information in the first message, the first message carries the operation information corresponding to the first operation; in response to the length of the operation information corresponding to the first operation being greater than the maximum length of the field for including the operation information in the first message, the first message carries the compressed and encoded operation information corresponding to the first operation.

In some implementations, the first message carries the operation intention information corresponding to the first operation; or the first message carries compressed and encoded operation intention information corresponding to the first operation.

In some implementations, in response to a length of the operation intention information corresponding to the first operation being less than or equal to a maximum length of a field for including the operation intention information in the first message, the first message carries the operation intention information corresponding to the first operation; in response to the length of the operation intention information corresponding to the first operation being greater than the maximum length of the field for including the operation intention information in the first message, the first message carries the compressed and encoded operation intention information corresponding to the first operation.

In some implementations, the first connection information is generated after the first terminal and the second terminal are first connected successfully, or after the first terminal and the second terminal are first connected successfully following an invalidation of the first connection information previously generated.

In some implementations, the first connection information may include: a communication address of the first terminal, a communication address of the second terminal.

In some implementations, the first connection information may include: a communication address of the first terminal, a communication address of the second terminal and a first connection validity period.

In some implementations, the communication address may be a Bluetooth MAC address.

In some implementations, in response to being within the first connection validity period currently, the first near-field connection information includes the first connection information; in response to being not within the first connection validity period currently, the first near-field connection information excludes the first connection information.

In some implementations, the first near-field connection information includes the first connection information regardless of whether being within the first connection validity period currently; or, the first near-field connection information includes the first connection information and the first connection validity period.

At operation 202, in response to determining that the first near-field connection information matches the second near-field connection information, controlling a second connection between the second terminal and the first terminal.

In some implementations, the second connection includes any one of: establishing a near-field wireless connection between the first terminal and the second terminal; disconnecting the near-field wireless connection between the first terminal and the second terminal; executing a multi-screen collaboration operation initiated by the first terminal through the second terminal; or initiating a multi-screen collaboration operation from the second terminal to the first terminal.

In some implementations, the multi-screen collaboration operation includes at least one of: projection operation across screens, input pass-back operation, copy and paste operation across screens, file collaboration operation across screens, multi-camera shooting operation across screens, application circulation and reply operation, sound playing circulation and reply operation, call circulation and reply operation, or the like.

In some implementations, the first connection and the second connection may be the same or may correspond to each other. For example, the first connection and the second connection may be the same for establishing the near-field wireless connection between the first terminal and the second terminal, or disconnecting the near-field wireless connection between the first terminal and the second terminal, or the first connection may be initiating the multi-screen collaboration operation and the second connection is executing the initiated multi-screen collaboration operation, or the second connection may be initiating the multi-screen collaboration operation and the first connection is executing the initiated multi-screen collaboration operation.

In some implementations, in response to determining that the first identification information matches the second identification information, and the first near-field connection information matches the second near-field connection information, controlling the second connection between the second terminal and the first terminal.

In some implementations, determining that the first near-field connection information matches the second near-field connection information includes determining that the first near-field connection information matches the second near-field connection information in response to at least one of followings: the operation information corresponding to the first operation matching the operation information corresponding to the second operation; the operation intention information corresponding to the first operation being the same as the operation intention information corresponding to the second operation; the first user account information matching the second user account information; or the first connection information being the same as the second connection information.

In some implementations, determining that the first near-field connection information matches the second near-field connection information includes: in response to the first connection information and the second connection information being the same and within the first connection validity period and the second connection validity period, determining that the first near-field connection information matches the second near-field connection information.

In some implementations, in response to determining that the first identification information matches the second identification information, and the first near-field connection information matches the second near-field connection information, controlling the second connection between the second terminal and the first terminal.

In some implementations, determining that the first identification information matches the second identification information includes: determining that the first identification information and the second identification information are the same.

In some implementations, the operation information corresponding to the first operation matching the operation information corresponding to the second operation includes: the operation information corresponding to the first operation being the same as the operation information corresponding to the second operation; or the operation information corresponding to the first operation and the operation information corresponding to the second operation being in correspondence in the first corresponding relation.

In some implementations, the operation information corresponding to the first operation and the operation information corresponding to the second operation being in correspondence in the first corresponding relation refers to that the operation information corresponding to the second operation, which corresponds to the operation information corresponding to the first operation, is searchable in the first corresponding relation.

In some implementations, the operation information corresponding to the first operation and the operation information corresponding to the second operation being in correspondence in the first corresponding relation refers to that, the operation information corresponding to the second operation, which corresponds to the operation information corresponding to the first operation, is searchable in the first corresponding relation, and in the first corresponding relation, operation intention information which corresponds to the operation information corresponding to the first operation, operation intention information which corresponds to the operation information corresponding to the second operation are the same as the operation intention information corresponding to the first operation and the operation intention information corresponding to the second operation.

In some implementations, the first user account information matching the second user account information includes: the first user account information and the second user account information being the same; or the first user account information and the second user account information being in correspondence in a preset third corresponding relation between the first user account information and the second user account information.

In some implementations, the first user account information and the second user account information being in correspondence in the third corresponding relation refers to that the second user account information corresponding to the first user account information is searchable in the third corresponding relation.

In some implementations, in response to determining that the first near-field connection information does not match the second near-field connection information or the first identification information does not match the second identification information, query information is displayed for querying a user whether to continue a subsequent determination process, if a continuation instruction is received from the user, an authentication is performed through the first terminal, and in response to the authentication being passed, the subsequent determination process is continued; if no instruction or a stop instruction is received, the present flow ends.

In some implementations, determining that the first identification information does not match the second identification information includes: determining that the first identification information and the second identification information are different.

In some implementations, determining that the first near-field connection information does not match the second near-field connection information includes determining that the first near-field connection information does not match the second near-field connection information in response to at least one of followings: the operation information corresponding to the first operation not matching the operation information corresponding to the second operation; the operation intention information corresponding to the first operation being different from the operation intention information corresponding to the second operation; the first user account information not matching the second user account information; or the first connection information being different from the second connection information.

In some implementations, determining that the first near-field connection information does not match the second near-field connection information includes: in response to the first connection information and the second connection information being different or not within the first connection validity period and the second connection validity period, determining that the first near-field connection information does not match the second near-field connection information.

In some implementations, the operation information corresponding to the first operation not matching the operation information corresponding to the second operation includes: the operation information corresponding to the first operation being different from the operation information corresponding to the second operation; or the operation information corresponding to the first operation and the operation information corresponding to the second operation being not in correspondence in the first corresponding relation.

In some implementations, the operation information corresponding to the first operation and the operation information corresponding to the second operation being not in correspondence in the first corresponding relation refers to that operation information corresponding to the second operation, which corresponds to the operation information corresponding to the first operation, is not searchable in the first corresponding relation.

In some implementations, the operation information corresponding to the first operation and the operation information corresponding to the second operation being not in correspondence in the first corresponding relation refers to that the operation information corresponding to the second operation, which corresponds to the operation information corresponding to the first operation, is searchable in the first corresponding relation, but in the first corresponding relation, operation intention information which corresponds to the operation information corresponding to the first operation, operation intention information which corresponds to the operation information corresponding to the second operation are different from the operation intention information corresponding to the first operation or the operation intention information corresponding to the second operation.

In some implementations, the first user account information not matching the second user account information includes: the first user account information and the second user account information being different; or the first user account information and the second user account information being not in correspondence in a preset third corresponding relation between the first user account information and the second user account information.

In some implementations, t the first user account information and the second user account information being not in correspondence in the preset third corresponding relation refers to that the second user account information corresponding to the first user account information is not searchable in the third corresponding relation.

In some implementations, in response to the second terminal serving as a master device, performing the authentication through the first terminal includes: generating an authentication code, and displaying the generated authentication code; receving an authentication code sent by the first terminal, and in response to the generated authentication code being the same as the received authentication code, authentication is passed; in response to the generated authentication code being different from the received authentication code, authentication is not passed.

In some implementations, in response to the second terminal serving as a slave device, performing the authentication through the first terminal includes: displaying an authentication code input interface, receiving an authentication code input by a user, and sending the authentication code input by the user to the first terminal for performing the authentication.

In some implementations, in response to the second terminal serving as the master device, performing the authentication through the first terminal includes: generating and displaying a connection two-dimensional code; receving a connection authentication code obtained by scanning the connection two-dimensional code by the first terminal; performing a verification on the connection authentication code, and in response to the verification being passed, the authentication is passed; in response to the verification being not passed, the authentication is not passed.

In some implementations, in response the second terminal serving as the slave device, performing the authentication through the first terminal includes: scanning a connection two-dimensional code displayed by the first terminal to obtain a connection authentication code, and sending the connection authentication code to the first terminal.

In some implementations, in response to not determining that the first terminal matches the second terminal within a preset time duration upon identifying the second operation, displaying prompt information for prompting the user that the connection fails.

In some implementations, the first terminal and the second terminal are peer-to-peer executing entities, and in response to determining that the first terminal matches the second terminal, directly controlling the second connection between the second terminal and the first terminal.

In some implementations, the first terminal and the second terminal are not peer-to-peer executing entities, before performing an operation corresponding to the first operation, the device interaction method further includes: determining a master-slave relation between the first terminal and the second terminal based on the first device information and the second device information; the controlling the second connection between the second terminal and the first terminal including: controlling the second connection between the second terminal and the first terminal based on the master-slave relation between the first terminal and the second terminal.

In some implementations, the master-slave relation may be referred to as a relation between a server and a client, a relation between a source end and a sink end, and the like.

In some implementations, the determining a master-slave relation between the first terminal and the second terminal based on the first device information and the second device information includes: in response to hardware condition corresponding to the first hardware information being higher than hardware condition corresponding to the second hardware information, determining that the first terminal serves as a master device and the second terminal serves as a slave device. For example, in response to a size of the display screen of the first terminal being greater than a size of the display screen of the second terminal, it is determined that the first terminal serves as the master device and the second terminal serves as the slave device.

In some implementations, the determining a master-slave relation between the first terminal and the second terminal based on the first device information and the second device information includes: in response to hardware condition corresponding to the first hardware information being lower than hardware condition corresponding to the second hardware information, determining that the second terminal serves as a master device and the first terminal serves as a slave device. For example, in response to a size of the display screen of the first terminal being less than a size of the display screen of the second terminal, it is determined that the second terminal serves as the master device and the first terminal serves as the slave device.

In some implementations, the determining a master-slave relation between the first terminal and the second terminal based on the first device information and the second device information includes: in response to hardware condition corresponding to the first hardware information being the same as hardware condition corresponding to the second hardware information, determining the master-slave relation between the first terminal and the second terminal based on the first time information and the second time information.

In some implementations, the determining the master-slave relation between the first terminal and the second terminal based on the first time information and the second time information includes: in response to the first time information being earlier than the second time information, determining that the first terminal serves as the master device and the second terminal serves as the slave device.

In some implementations, the determining the master-slave relation between the first terminal and the second terminal based on the first time information and the second time information includes: in response to the first time information being later than the second time information, determining that the second terminal serves as the master device and the first terminal serves as the slave device.

In some implementations, hardware condition of a smart terminal with device type information being PAD is higher than that of a smart terminal with device type information being a mobile phone, and hardware condition of a smart terminal with device type information being a desktop computer, a notebook computer, a smart screen, or the like is higher than that of the smart terminal with the device type information being PAD.

In some implementations, for two smart terminals with the same device type information, the greater the side of the display screen is, the higher the hardware condition is.

In some implementations, the greater the size of the display screen of the smart terminal is, the higher the hardware condition of the smart terminal is.

In some implementations, for the projection operation across screens, the copy and paste operation across screens, and the file collaboration operation across screens, the master-slave relation is to be determined based on the device type information and information of the side of the display screen.

In some implementations, for the multi-camera shooting operation across screens, the master-slave relation is to be determined based on information of a resolution of an image captured by a camera.

In some implementations, the controlling the second connection between the second terminal and the first terminal based on the master-slave relation between the first terminal and the second terminal includes: initiating the second connection from the smart terminal serving as the slave device to the smart terminal serving as the master device.

In the device interaction method provided by the present application, the second connection is controlled to be performed between the second terminal and the first terminal based on the identified operation, i.e., an operation execution mode approximating to a natural authentication of the user is adopted, the threshold for user's using is relatively low, and the user experiences are improved.

In some implementations, after the near-field wireless connection is established between the first terminal and the second terminal or the multi-screen collaboration operation is performed between the first terminal and the second terminal, another near-field wireless connection may also be established between the first terminal and another smart terminal, or another multi-screen collaboration operation may be performed between the first terminal and another smart terminal, and another near-field wireless connection may also be established between the second terminal and another smart terminal, or another multi-screen collaboration operation may be performed between the second terminal and another smart terminal.

In order to more fully present the implementation process of the device interaction method provided in the present application, two examples are listed below for illustration, the examples listed below are not intended to limit the protection scope of the present application.

### Example 1

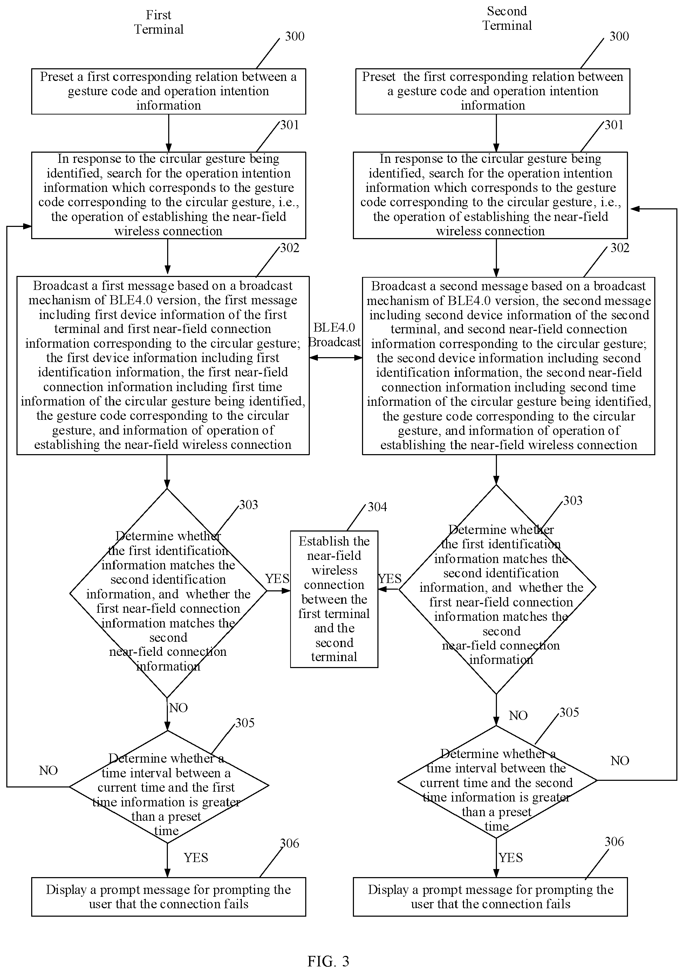

This example describes an operation of establishing a near-field wireless connection based on gesture recognition, as shown in Fig. 3, the method includes following operations 300 to 306.

At operation 300, a first terminal presets a first corresponding relation between a gesture code and operation intention information, and a second terminal presets a first corresponding relation between a gesture code and operation intention information.

In the example, the operation intention information which corresponds to the gesture code corresponding to a circular gesture represents the operation of establishing the near-field wireless connection.

At operation 301, in response to a circular gesture being identified, the first terminal searches for the operation intention information which corresponds to the gesture code corresponding to the circular gesture, i.e., the operation of establishing the near-field wireless connection; in response to the circular gesture being identified, the second terminal searches for the operation intention information which corresponds to the gesture code corresponding to the circular gesture, i.e., the operation of establishing the near-field wireless connection.

At operation 302, the first terminal broadcasts a first message based on a broadcast mechanism of BLE4.0 version, the first message including first device information of the first terminal and first near-field connection information corresponding to the circular gesture; the first device information including first identification information, the first near-field connection information including first time information of the circular gesture being identified, the gesture code corresponding to the circular gesture, and information of the operation of establishing the near-field wireless connection; the second terminal broadcasts a second message based on a broadcast mechanism of BLE4.0 version, the second message including second device information of the second terminal, and second near-field connection information corresponding to the circular gesture; the second device information including second identification information, the second near-field connection information including second time information of the circular gesture being identified, the gesture code corresponding to the circular gesture, and information of the operation of establishing the near-field wireless connection.

At operation 303, the first terminal determines whether the first identification information matches the second identification information, determines whether the first near-field connection information matches the second near-field connection information, if the first identification information matches the second identification information, and the first near-field connection information matches the second near-field connection information, operation 304 is to be executed, and if the first identification information does not match the second identification information, or the first near-field connection information does not match the second near-field connection information, operation 305 is to be executed; the second terminal determines whether the first identification information matches the second identification information, determines whether the first near-field connection information matches the second near-field connection information, if the first identification information matches the second identification information, and the first near-field connection information matches the second near-field connection information, operation 304 is to be executed, and if the first identification information does not match the second identification information, or the first near-field connection information does not match the second near-field connection information, operation 305 is to be executed.

At operation 304, the near-field wireless connection is established between the first terminal and the second terminal.

At operation 305, the first terminal determines whether a time interval between a current time and the first time information is greater than a preset time, and if the time interval is greater than the preset time, operation 306 is to be executed; if the time interval is not greater than the preset time, operation 301 continues to executed; the second terminal determines whether a time interval between the current time and the second time information is greater than a preset time, and if the time interval is greater than the preset time, operation 306 is to be executed; if the time interval is not greater than the preset time, operation 301 continues to executed.

At operation 306, a prompt message for prompting the user that the connection fails is displayed.

### Example 2

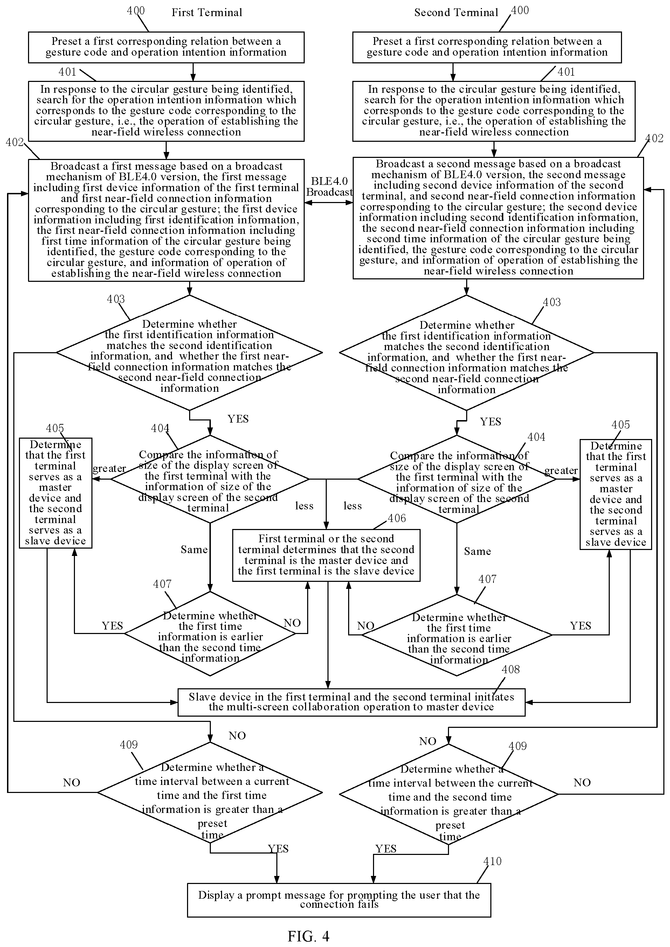

This example describes performing a multi-screen collaboration operation based on gesture recognition, and as shown in Fig. 4, the method includes following operations 400 to 410.

At operation 400, a first terminal presets a first corresponding relation between a gesture code and operation intention information, and a second terminal presets a first corresponding relation between a gesture code and operation intention information.

In the example, the operation intention information which corresponds to the gesture code corresponding to a circular gesture represents the operation of establishing the near-field wireless connection.

At operation 401, in response to a circular gesture being identified, the first terminal searches for the operation intention information which corresponds to the gesture code corresponding to the circular gesture, i.e., the operation of establishing the near-field wireless connection; in response to the circular gesture being identified, the second terminal searches for the operation intention information which corresponds to the gesture code corresponding to the circular gesture, i.e., the operation of establishing the near-field wireless connection.

At operation 402, the first terminal broadcasts a first message based on a broadcast mechanism of BLE4.0 version, the first message including first device information of the first terminal and first near-field connection information corresponding to the circular gesture; the first device information including first identification information and information of a size of a display screen of the first terminal, the first near-field connection information including first time information of the circular gesture being identified, the gesture code corresponding to the circular gesture, and information of the operation of establishing the near-field wireless connection; the second terminal broadcasts a second message based on a broadcast mechanism of BLE4.0 version, the second message including second device information of the second terminal and second near-field connection information corresponding to the circular gesture; the second device information including second identification information and information of a size of a display screen of the second terminal, the second near-field connection information including second time information of the circular gesture being identified, the gesture code corresponding to the circular gesture, and information of the operation of establishing the near-field wireless connection.

At operation 403, the first terminal determines whether the first identification information matches the second identification information, determines whether the first near-field connection information matches the second near-field connection information, if the first identification information matches the second identification information, and the first near-field connection information matches the second near-field connection information, operation 404 is to be executed, and if the first identification information does not match the second identification information, or the first near-field connection information does not match the second near-field connection information, operation 409 is to be executed; the second terminal determines whether the first identification information matches the second identification information, determines whether the first near-field connection information matches the second near-field connection information, if the first identification information matches the second identification information, and the first near-field connection information matches the second near-field connection information, operation 404 is to be executed, and if the first identification information does not match the second identification information, or the first near-field connection information does not match the second near-field connection information, operation 409 is to be executed.

At operation 404, the first terminal compares the information of the size of the display screen of the first terminal with the information of the size of the display screen of the second terminal, and if the size of the display screen of the first terminal is greater than the size of the display screen of the second terminal, operation 405 is to be executed; if the size of the display screen of the first terminal is less than the size of the display screen of the second terminal, operation 406 is to be executed; if the size of the display screen of the first terminal and the size of the display screen of the second terminal are the same, operation 407 is to be executed. The second terminal compares the information of the size of the display screen of the first terminal with the information of the size of the display screen of the second terminal, and if the size of the display screen of the first terminal is greater than the size of the display screen of the second terminal, operation 405 is to be executed; if the size of the display screen of the first terminal is less than the size of the display screen of the second terminal, operation 406 is to be executed; if the size of the display screen of the first terminal and the size of the display screen of the second terminal are the same, operation 407 is to be executed.

At operation 405, the first terminal or the second terminal determines that the first terminal serves as a master device and the second terminal serves as a slave device, and continues to execute operation 408.

At operation 406, the first terminal or the second terminal determines that the second terminal serves as the master device and the first terminal serves as the slave device, and continues to execute operation 408.

At operation 407, the first terminal determines whether the first time information is earlier than the second time information, and if the first time information is earlier than the second time information, operation 405 is to be executed; if the first time information is not earlier than the second time information, operation 406 is to be executed; the second terminal determines whether the first time information is earlier than the second time information, and if the first time information is earlier than the second time information, operation 405 is to be executed; if the first time information is not earlier than the second time information, operation 406 is to be executed.

At operation 408, the slave device in the first terminal and the second terminal initiates the multi-screen collaboration operation to the master device.

At operation 409, the first terminal determines whether a time interval between a current time and the first time information is greater than a preset time, and if the time interval is greater than the preset time, operation 410 is to be executed; if the time interval is not greater than the preset time, operation 401 continues to executed; the second terminal determines whether a time interval between the current time and the second time information is greater than a preset time, and if the time interval is larger than the preset time, operation 401 continues to executed.

At operation 410, a prompt message for prompting the user that the connection fails is displayed.

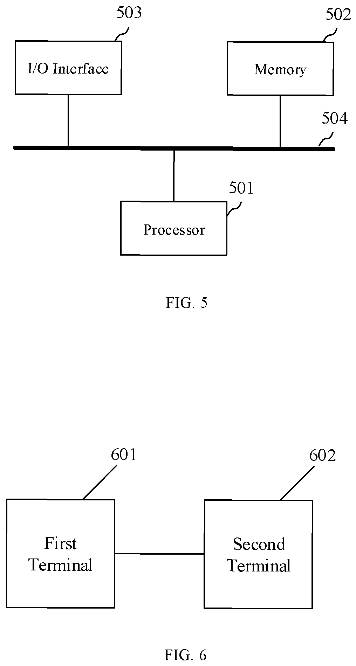

In a third aspect, referring to Fig. 5, an embodiment of the present application provides an electronic device, including: at least one processor 501; and a memory 502 having at least one computer program stored thereon, the at least one computer program, when executed by the at least one processor 501, causes the at least one processor 501 to implement the device interaction method described above.

In some implementations, the electronic device further includes: at least one I/O interface 503 connected between the processor 501 and the memory 502, and configured to implement information interaction between the processor 501 and the memory 502.

The processor 501 is a device having a capability of processing data, includes, but is not limited to, a Central Processing Unit (CPU), and the like; the memory 502 is a device having a capability of storing data, includes, but is not limited to, a random access memory (RAM, in particular, SDRAM, DDR, and the like), a read only memory (ROM), an electrically erasable programmable read only memory (EEPROM), and a FLASH; the I/O interface (read/write interface) 503 is connected between the processor 101 and the memory 502, enables to implement information interaction between the processor 501 and the memory 502, and includes, but is not limited to, a data Bus 504, and the like.

In some implementations, the processor 501, the memory 502, and the I/O interface 503 are connected together through a bus 504, and are then connected to other components of a computing device.

In a fourth aspect, an embodiment of the present application provides a computer-readable storage medium having a computer program stored thereon, the computer program, when executed by a processor, causes the processor to implement the device interaction method described above.

Fig. 6 is a block diagram of a device interaction system according to an embodiment of the present application.

In a fifth aspect, referring to Fig. 6, an embodiment of the present application provides a device interaction system, including: a fist terminal 601, and a second terminal 602.

The first terminal 601 is configured to: in response to a first operation being identified, broadcast a first message based on the first operation, the first message including first near-field connection information corresponding to the first operation; acquire a second message broadcasted by a second terminal based on an identified second operation, the second message including second near-field connection information corresponding to the second operation; and in response to determining that the first near-field connection information matches the second near-field connection information, control a first connection between the first terminal and the second terminal.

The second terminal 602 is configured to: in response to the second operation being identified, broadcast the second message based on the second operation, the second message including the second near-field connection information corresponding to the second operation; acquire the first message broadcasted by the first terminal based on the identified first operation, the first message including the first near-field connection information corresponding to the first operation; and in response to determing that the first near-field connection information matches the second near-field connection information, control a second connection between the second terminal and the first terminal.

In some implementations, the first connection and the second connection may be the same or may correspond to each other. For example, the first connection and the second connection may be the same for establishing the near-field wireless connection between the first terminal and the second terminal, or disconnecting the near-field wireless connection between the first terminal and the second terminal, or the first connection may be initiating the multi-screen collaboration operation and the second connection is executing the initiated multi-screen collaboration operation, or the second connection may be initiating the multi-screen collaboration operation and the first connection is executing the initiated multi-screen collaboration operation.

In some implementations, the first message further includes first device information of the first terminal; the second message further includes second device information of the second terminal; the first terminal 601 is further configured to determine a master-slave relation between the first terminal and the second terminal based on the first device information and the second device information, and control the first connection between the first terminal and the second terminal based on the master-slave relation between the first terminal and the second terminal.

The second terminal 602 is further configured to determine a master-slave relation between the first terminal and the second terminal based on the first device information and the second device information, and control the second connection between the second terminal and the first terminal based on the master-slave relation between the first terminal and the second terminal.

In some implementations, the first message further includes first identification information of the first terminal; the second message further includes second identification information of the second terminal; the first terminal 601 is further configured to, in response to determining that the first identification information matches the second identification information, and the first near-field connection information matches the second near-field connection information, control the first connection between the first terminal and the second terminal.

The second terminal 602 is further configured to, in response to determining that the first identification information matches the second identification information, and the first near-field connection information matches the second near-field connection information, control the second connection between the second terminal and the first terminal.

The implementation process of the device interaction system is the same as that of the device interaction method described above, and thus is not described herein again.

It should be understood by those of ordinary skill in the art that all or some of the operations in the method, or the functional modules/components in the apparatus or system described above may be implemented as software, firmware, hardware, or suitable combinations thereof. In a hardware implementation, the division between the functional modules/components stated above does not correspond to the division of physical components; for example, one physical component may have a plurality of functions, or one function or operation may be performed through a cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be districuted on a computer-readable medium, the computer-readable medium may include computer storage medium (or non-transitory medium) and communication medium (or transitory medium). As known to those skilled in the art, the computer storage medium includes volatile/nonvolatile or removable/non-removable medium used in any method or technology for storing information (such as computer-readable instructions, data structures, program modules and other data). The computer storage medium includes, but is not limited to, RAM, ROM, EEPROM, a flash memory or other memory techniques, CD-ROM, a Digital Video Disk (DVD) or other optical discs, magnetic cassettes, magnetic tapes, magnetic disks or other magnetic storage devices, or any other medium which can be used to store the desired information and can be accessed by a computer. In addition, as known to those skilled in the art, the communication medium generally includes computer-readable instructions, data structures, program modules or other data in a modulated data signal, such as a carrier wave or other transmission mechanism, and may include any information delivery medium.

The present application discloses the exemplary embodiments, and although specific terms are employed, they are used and should only be interpreted in a generic and descriptive meaning and not for purposes of a limitation. In some examples, it is apparent to those skilled in the art that features, characteristics and/or elements described in connection with specific embodiments may be used alone or in combination with features, characteristics and/or elements described in connection with other embodiments, unless explicitly stated otherwise. Therefore, it should be understood by those skilled in the art that various changes in form and details may be made without departing from the scope of the present application as set forth in the appended claims.

## Claims

1. A device interaction method, applied to a first terminal, comprising:
in response to a first operation being identified, broadcasting a first message based on the first operation, the first message comprising first near-field connection information corresponding to the first operation;
acquiring a second message broadcasted by a second terminal based on an identified second operation, the second message comprising second near-field connection information corresponding to the second operation; and
in response to determining that the first near-field connection information matches the second near-field connection information, controlling a first connection between the first terminal the second terminal.

2. The method of claim 1, wherein the first message further comprises first device information of the first terminal; the second message further comprises second device information of the second terminal;
before controlling the first connection between the first terminal and the second terminal, the device interaction method further comprises:
determining a master-slave relation between the first terminal and the second terminal based on the first device information and the second device information;
controlling the first connection between the first terminal and the second terminal comprises: controlling the first connection between the first terminal and the second terminal based on the master-slave relation between the first terminal and the second terminal.

3. The method of claim 1, wherein the first message further comprises first identification information of the first terminal; the second message further comprises second identification information of the second terminal;
controlling the first connection between the first terminal and the second terminal in response to determining that the first near-field connection information matches the second near-field connection information comprises: in response to determining that the first identification information matches the second identification information, and the first near-field connection information matches the second near-field connection information, controlling the first connection between the first terminal and the second terminal.

4. The method of claim 1, wherein the broadcasting a first message based on the first operation comprises:
searching for operation intention information which corresponds to operation information corresponding to the first operation in a preset first corresponding relation between operation information corresponding to the first operation, operation information corresponding to the second operation and operation intention information; and
broadcasting the first message.

5. The method of claim 1, wherein the first near-field connection information comprises at least one of: operation information corresponding to the first operation, operation intention information corresponding to the first operation, first time inform ation of the first operation being identified, first user account information of the first terminal, first connection information of the first terminal, or a first connection validity period of the first connection information;
the second near-field connection information comprises at least one of: operation information corresponding to the second operation, operation intention information corresponding to the second operation, second time information of the second operation being identified, second user account information of the second terminal, second connection information of the second terminal, or a second connection validity period of the second connection information.

6. The method of claim 5, wherein determining that the first near-field connection information matches the second near-field connection information comprises determining that the first near-field connection information matches the second near-field connection information in response to at least one of followings:
the operation information corresponding to the first operation matching the operation information corresponding to the second operation;
the operation intention information corresponding to the first operation being the same as the operation intention information corresponding to the second operation;
the first user account information matching the second user account information; or
the first connection information being the same as the second connection information.

7. The method of claim 1, wherein the first near-field connection information comprises first connection information of the first terminal and a first connection validity period of the first connection information; the second near-field connection information comprises second connection information of the second terminal and a second connection validity period of the second connection information;
determining that the first near-field connection information matches the second near-field connection information comprises:
in response to the first connection information and the second connection information being the same and within the first connection validity period and the second connection validity period, determining that the first near-field connection information matches the second near-field connection information.

8. The method of claim 1, wherein the first connection comprises any one of: establishing a near-field wireless connection between the first terminal and the second terminal; disconnecting the near-field wireless connection between the first terminal and the second terminal; initiating a multi-screen collaboration operation to the second terminal; or executing a multi-screen collaboration operation initiated by the second terminal.

9. An electronic device, comprising:
at least one processor; and
a memory having at least one computer program stored thereon, the at least one computer program, when executed by the at least one processor, causes the at least one processor to implement the device interaction method of any one of claims 1 to 8.

10. A computer-readable storage medium having a computer program stored thereon, the computer program, when executed by a processor, causes the processor to implement the device interaction method of any one of claims 1 to 8.

11. A device interaction system, comprising:
a first terminal configured to, in response to a first operation being identified, broadcast a first message based on the first operation, the first message comprising first near-field connection information corresponding to the first operation, acquire a second message broadcasted by a second terminal based on an identified second operation, the second message comprising second near-field connection information corresponding to the second operation, and in response to determining that the first near-field connection information matches the second near-field connection information, control a first connection between the first terminal and the second terminal,
the second terminal configured to, in response to the second operation being identified, broadcast the second message based on the second operation, the second message comprising the second near-field connection information corresponding to the second operation, acquire the first message broadcasted by the first terminal based on the identified first operation, the first message comprising the first near-field connection information corresponding to the first operation, and in response to determining that the first near-field connection information matches the second near-field connection information, control a second connection between the second terminal and the first terminal.
